# EUROPÄISCHE PATENTSCHRIFT

(11) **EP 2 553 748 B1**
(45) Veröffentlichungstag und Bekanntmachung des Hinweises auf die Patenterteilung: **11.12.2019**
(21) Anmeldenummer: 11711882.8
(22) Anmeldetag: 31.03.2011
(51) Int. Cl.: H01M 4/136, C01B 6/04, C01B 21/06, H01M 10/052, H01M 4/04, C01D 15/00, C01B 21/092

(54) **METALLIMIDVERBINDUNGEN ALS ANODENMATERIALIEN FÜR LITHIUMBATTERIEN UND GALVANISCHE ELEMENTE MIT HOHER SPEICHERKAPAZITÄT**
METAL IMIDE COMPOUNDS AS ANODE MATERIALS FOR LITHIUM BATTERIES AND GALVANIC ELEMENTS WITH A HIGH STORAGE CAPACITY
COMPOSÉS D'IMIDES DE MÉTAL COMME MATÉRIAUX D'ANODE POUR BATTERIES AU LITHIUM ET ÉLÉMENTS GALVANIQUES À CAPACITÉ DE STOCKAGE ÉLEVÉE

(30) Priorität: 31.03.2010 DE 102010003501
(43) Veröffentlichungstag der Anmeldung: 06.02.2013
(73) Patentinhaber: Albemarle Germany GmbH, 65926 Frankfurt am Main (DE)
(72) Erfinder: WIETELMANN, Ulrich, 61381 Friedrichsdorf (DE)
(74) Vertreter: Rottmayer, Hans
(86) Internationale Anmeldenummer: PCT/EP2011/055035
(87) Internationale Veröffentlichungsnummer: WO 2011/121084

(56) Entgegenhaltungen:
- EP-A1- 2 494 636
- JP-A- 2008 243 809
- US-A1- 2003 129 126
- US-A1- 2008 286 196
- YUN HANG HU ET AL: "Hydrogen Storage of Li 2 NH Prepared by Reacting Li with NH 3", INDUSTRIAL & ENGINEERING CHEMISTRY RESEARCH, Bd. 45, Nr. 1, 1. Januar 2006 (2006-01-01) , Seiten 182-186, XP55001308, ISSN: 0888-5885, DOI: 10.1021/ie050690l
- HUI WU: "Structure of Ternary Imide Li 2 Ca(NH) 2 and Hydrogen Storage Mechanisms in Amide-Hydride System", JOURNAL OF THE AMERICAN CHEMICAL SOCIETY, Bd. 130, Nr. 20, 1. Mai 2008 (2008-05-01), Seiten 6515-6522, XP55001310, ISSN: 0002-7863, DOI: 10.1021/ja800300e in der Anmeldung erwähnt
- DUNCAN H. GREGORY: "Lithium nitrides, imides and amides as lightweight, reversible hydrogen stores", JOURNAL OF MATERIALS CHEMISTRY, Bd. 18, Nr. 20, 1. Januar 2008 (2008-01-01), Seite 2321, XP55001309, ISSN: 0959-9428, DOI: 10.1039/b801021h
- Liu ET AL: "Synthesis and crystal structure of a novel nitride hydride Sr2LiNH2", Journal of Alloys and Compounds, Bd. 495 11. Februar 2010 (2010-02-11), Seiten 272-274, XP55001402, DOI: 10.1016/j.jallcom.2010.02.11 [gefunden am 2011-06-27] in der Anmeldung erwähnt
- Kyle Michel ET AL: "First-Principles-Study of the Li-Mg-N-H System: Compound Structures and Hydrogen-Storage Properties", Journal Physical Chemistry C, Bd. 113 20. Juli 2009 (2009-07-20), Seiten 14551-14558, XP55001403, DOI: 10.121/jp903797v [gefunden am 2011-06-27] in der Anmeldung erwähnt
- Eveline Weidner ET AL: "Hydrogenation Pathway in Li2Mg(NH)2", Journal Physical Chemistry C, Bd. 113 10. August 2009 (2009-08-10), Seiten 15772-15777, XP55001405, DOI: 10.1021/jp9034997 [gefunden am 2011-06-27] in der Anmeldung erwähnt
- Niewa ET AL: "Redetermination of the crystal structure of tetralithium mononitride monohydride", Zeitschrift für Kristallografie, Bd. 217 8. August 2002 (2002-08-08), Seiten 317-318, XP55001408, München [gefunden am 2011-06-27] in der Anmeldung erwähnt

## Beschreibung

Die derzeit verwendeten wieder aufladbaren Lithiumbatterien enthalten Graphit als Anodenmaterial. Graphit fungiert als Lithiuminsertionsmaterial und es hat gem. der Gleichung (Gl.)

Li + 6C → LiC₆

eine theoretische Kapazität von 372 mAh/g bei einem Potential von etwa 0,2 V *vs* Li/Li⁺. Die wesentlich höhere Speicherkapazität von Lithiummetall (3860 mAh/g) kann in praxistauglichen Batterien nicht genutzt werden, da solche Batterien weder sicher noch zyklenstabil sind. Beim Zyklen scheidet sich das Lithiummetall teilweise nicht planar, sondern in Form von nadelförmigen Auswachsungen (Dendriten) ab. Diese Auswachsungen können den physischen Kontakt zur Metallanode verlieren, wodurch die elektrochemische Zelle entsprechend an Kapazität abnimmt. Noch gravierender sind die Folgen, wenn solche nadelförmigen Dendriten den Separator durchdringen. Dadurch kann die Batteriezelle kurzgeschlossen werden mit häufig katastrophalen Folgen: thermischer run-away, häufig begleitet von Feuererscheinungen.

Es gab deshalb Bemühungen, statt reinem Lithiummetall Lithiumlegierungen als Anodenmaterial zu verwenden. Aber Lithiumlegierungen zeigen extrem starke Volumenschwankungen bei der Lithium- Ein- und -Auslagerung (teilweise mehrere 100 %, z.B. Li₉Al₄: 238 %). Deshalb konnten sich Legierungsanoden mit der Ausnahme von Zinn-Graphit-Kompositen am Markt nicht durchsetzen. Zinn ist jedoch ein seltenes und teures Element, welches den breiten Einsatz zinnhaltiger Materialen verhinderte.

Tarascon und Aymard schlugen eine elektrochemische Zelle vor, bei der im entladenen Zustand ein Metallhydrid MHₓ bzw. im geladenen Zustand ein Gemisch aus Lithiumhydrid mit dem Metall M als negative Elektrode (Anode) Verwendung findet (EP2026390A2):

MHₓ + Li⁺ + e⁻ ⇔ xLiH + M (1)

mit M = La, Mg, Ni, Na, Ti

Das in der genannten Patentschrift im Detail beschriebene Mg-basierende System weist jedoch eine ausgeprägte Hysterese auf und seine Funktionsfähigkeit in einer echten Lithiumbatterie konnte bisher nicht demonstriert EP 2 494 636 A1, welches ein zum Stand der Technik nach Artikel 54(3) EPÜ gehörendes Dokument ist, zeigt übergangsmetallfreie stickstoffhaltige Hydridanoden der allgemeinen Formel
LiₒNH₃₋ₒ, wobei o = 1, 2 oder 3 ist, und wobei diese im geladenen Zustand mit Lithiumhydrid gemischt sind und galvanische Elemente, beispielsweise Lithiumbatterien, die als Anode diese Übergangsmetallfreien stickstoffhaltigen Hydridanoden enthalten.

Aus der JP 2008 243809 sind Nickelmetallhydrid-Batterien bekannt, welche Lithiumimid bzw. Lithiumamid enthalten.

Es ist ein Anodenmaterial gesucht, das die Nachteile des Stands der Technik vermeidet, d.h.
- eine hohe Kapazität (>> 372 mAh/g),
- keine teuren oder giftigen Bestandteile enthält und
- gleichzeitig Lithium unter Beibehaltung der grundlegenden Raumstruktur aufzunehmen in der Lage ist und das infolgedessen eine gute Zyklenstabilität aufweist.

Es wurde überraschend gefunden, dass ein galvanisches Element, welches Metallimidverbindungen der allgemeinen Formel (I)

M¹₄₋₂ₓM²ₓ(NH)₂ · y M¹NH₂ (I)

mit
M¹ = Alkalimetall (Li, Na, K, Rb, Cs oder eine beliebige Mischung daraus)
M2 = Erdalkalielement (Mg, Ca, Sr, Ba oder eine beliebige Mischung daraus)
x und y unabhängig voneinander eine Zahl zwischen 0 und 1 im entladenen Zustand oder Metallimidverbindungen der allgemeinen Formel (II)

Li₄M¹₄₋₂ₓM²ₓ(NH)₂ · y LiH (II)

mit
M¹ = Alkalimetall (Li, Na, K, Rb, Cs oder eine beliebige Mischung daraus)
M² = Erdalkalielement (Mg, Ca, Sr, Ba oder eine beliebige Mischung daraus)
x und y unabhängig voneinander eine Zahl zwischen 0 und 1 im geladenen Zustand enthält,
eine hohe reversible Speicherkapazität aufweist. Die allgemeine, reversible Elektrodenreaktion ist wie folgt:

M¹₄₋₂ₓM²ₓ(NH)₂ + 4 Li⁺ + 4e⁻ ⇔ Li₄M¹₄₋₂ₓM²ₓ(NH)₂ (3)

Um eine besonders hohe spezifische Kapazität zu erreichen, ist es bevorzugt, dass M¹ und M² eine möglichst geringe Atommasse aufweisen, d.h. M¹ ist bevorzugt Li und M² ist bevorzugt Mg oder Ca.

Vorzugsweise enthält das galvanische Element im entladenen Zustand als aktives Anodenmaterial Li₂NH, MgNH, Li₂Mg(NH)₂, Li₂Ca(NH)₂, MgCa(NH)₂, Li₄Mg(NH)₃, Li₂Mg₂(NH)₃ oder es besteht daraus.

Gleichfalls bevorzugt enthält das galvanische Element im geladenen Zustand als aktives Anodenmaterial Li₄NH, Li₂MgNH, Li₆Mg(NH)₂, Li₆Ca(NH)₂, Li₄MgCa(NH)₂, Li₁₀Mg(NH)₃, Li₃Mg₂(NH)₃ oder es besteht daraus.

Die besonders bevorzugten Redoxpaare sind:

Li₂NH + 2Li⁺ + 2e⁻ ⇔ Li₄NH (4)

und

MgNH + 2Li+ + 2e⁻ ⇔ Li₂MgNH (5)

sowie

Li₂M²(NH)₂ + 4Li⁺ + 4e⁻ ⇔ Li₆M²(NH)₂ (M² = Mg, Ca) (6)

und

MgCa(NH)₂ + 4Li⁺ + 4e⁻ ⇔ Li₄MgCa(NH)₂ (7)

Es können auch Mischungen der Metallimidanodenmaterialien eingesetzt werden. Dabei kann es sich um rein physikalische Gemenge handeln oder aber auch um strukturell einheitliche Verbindungen wie z. B. Verbindungen vom Typ Li₄M²(NH)₃ oder Li₂M²₂(NH)₃ (M² = Mg, Ca, Sr oder Ba). Als Beispiele dienen Li₄Mg(NH)₃, wobei es sich formal um eine Mischung aus Li₂Mg(NH)₂ und Li₂NH handelt (s. K.J.Michel, A.R. Akbarzadeh, V. Ozolins, J.Phys.Chem.C. 2009, 113, 14551-8) und Li₂Mg₂(NH)₃, eine Mischverbindung aus Li₂Mg(NH)₂ und MgNH (s. E. Weidner et al., J. Phys. Chem. C 2009, 113, 15772-7).

Die theoretischen Kapazitäten für die sieben oben aufgeführten besonders bevorzugten Anodensysteme berechnen sich bezogen auf die entladene Form wie folgt:

| Anodenmaterial (entladen) | Formelmasse (g/mol) | insertierbares Lithium (Moleq) | theoretische Kapazität (Ah/kg) |
|---|---|---|---|
| Li₂NH | 28,88 | 2 | 1856 |
| MgNH | 39,31 | 2 | 1364 |
| Li₂Mg(NH)₂ | 8,13 | 4 | 1574 |
| Li₂Ca(NH)₂ | 77,02 | 4 | 1392 |
| MgCa(NH)₂ | 94,38 | 4 | 1136 |
| Li₄Mg(NH)₃ | 97,07 | 6 | 1657 |
| Li₂Mg₂(NH)₃ | 107,49 | 6 | 1496 |

Alle besonders bevorzugten Anodenmaterialien auf Metallimidbasis weisen mithin mindestens die dreifache theoretische Kapazität, verglichen mit dem Stand der Technik (Graphit) auf.

Neben den oben beschriebenen Verbindungen sind Nitridhydride der allgemeinen Zusammensetzung M²₂LiH₂N mit M² = Mg, Ca, Sr, Ba oder eine beliebige Mischung daraus verwendbar. Als typisches Beispiel wird Sr₂LiH₂N (s. D.M. Liu, Q. Q. Liu, T. Z. Si, Q. A. Zhang, Journal of Alloys and Compounds, 495, 9 April 2010, 272-274) aufgeführt, das im erfindungsgemäßen Sinne als Metallimidanodenmaterial eingesetzt werden kann.

Es wurde überraschend gefunden, dass die Lithiumaufnahme oder -abgabe ohne grundsätzliche morphologische Strukturänderungen, d.h. durch Insertion bzw. Deinsertion von Lithium in die lonengitterstruktur der binären (x = 0) oder ternären (1 ≥ x > 0) M¹/M²/N/H - Phasen erfolgt.

Die Metallimidverbindungen können in Abhängigkeit von der Art der Gegenelektrode (Kathode) entweder in (teil)lithiumbeladener oder in (teil)entladener (delithiierter) Form eingesetzt werden. Während die delithiierte Anodenform beim Einsatz eines lithiumbeladenen Kathodenmaterials verwendet wird, gilt für die lithiierte Anodenform das Gegenteil. Dies wird anhand zweier Beispiele erläutert:
So kann die delithiierte Anodenform, beispielsweise Lithiumimid (Li₂NH), gegen ein lithiumbeladenes Insertionskathodenmaterial, beispielsweise Lithiummanganspinell (LiMn₂O₄) "verschaltet" werden. Die elektrochemische Redoxreaktion sieht dann wie folgt aus:

Li₂NH + 2LiMn₂O₄ ⇔ Li₄NH + Mn₂O₄ (8)

Soll das lithiumimidbasierte Anodenmaterial dagegen gegen eine lithiumfreie (oderarme) Kathode (beispielweise MnO₂) verschaltet werden, so ist es sinnvoller Weise in lithiumbeladener Form, also als Li₄NH einzusetzen:

Li₄NH + 2MnO₂ ⇔ Li₂NH + 2LiMnO₂ (9)

Beim Einsatz einer teillithiierten Form des Anodenmaterials wird eine für die Lithiumaufnahme ausreichende Menge des Kathodenmaterials entweder in ebenfalls teillithiierter Form oder als Mischung aus lithiumbe- und entladener Form eingesetzt. Dieses Vorgehen der Elektrodenbalancierung ist dem in der Materie bewanderten Fachmann geläufig.

Durch Zusatz von Lithiumamid zum entladenen Metallimidanodenmaterial lässt sich die spezifische Kapazität weiter steigern. Beispielsweise wird durch den äquimolaren Zusatz von LiNH₂ zu Lithiumimid die theoretische spezifische Kapazität auf 3103 Ah/kg gesteigert:

Li₂NH + LiNH₂ + 6Li⁺ + 6 e⁻ ⇔ 2Li₄NH + LiH (10)

Das Lithiumamid wird bevorzugt in feinverteilter Form eingesetzt. Ein solches Pulver kann bevorzugt aus Lithiumbronze in Gegenwart eines Wasserstoffakzeptors hergestellt werden (EP 1238944).

Die Beimengung von LiNH₂ kann durch Vermischen der reinen Komponenten erfolgen; es ist aber auch möglich, eine strukturell einheitliche Mischphase Li₂₋ₓNH₁₊ₓ beispielsweise durch Hydrieren von Li₃N bis zum gewünschten H-Gehalt zu synthetisieren (s. D. Chandra et al., DOE Hydrogen Program, FY 2009 Ann. Prog. Rep. 477-482).

Wie Gl. (10) zu entnehmen ist, entstehen bei der Li-Aufnahme durch Lithiumamid zwei getrennte Verbindungen (LiH und Li₄NH), d.h. es handelt sich nicht um einen Insertions-, sondern einen Konversionsmechanismus. Um die dadurch bedingte mechanische Belastung des Anodenverbundes zu minimieren, ist es im Sinne der Erfindung bevorzugt, den Lithiumamidzusatz auf maximal 1, besonders bevorzugt maximal 0,5 Äquivalent (eq.) pro eq. Metallimidanodenmaterial zu beschränken.

In analoger Weise kann die Lithiumdichte (bzw. die Lithiumentladekapazität) des geladenen Metallimidanodenmaterials durch Zusatz von Lithiumhydrid gesteigert werden, z.B.:

2Li₄NH + LiH ⇔ Li₂NH + LiNH₂ + 6Li⁺ + 6e⁻ (11)

Auch in diesem Falle wandelt sich das zugegebene LiH vollständig in eine andere Feststoffphase um, d.h. der Hydridzusatz sollte erfindungsgemäß eher in geringeren Mengen erfolgen. Maximal wird 1 eq LiH pro eq. geladenem Metallimidanodenmaterial zugegeben, besonders bevorzugt max. 0,5 eq.

Die Metallimidanodenmaterialien werden teilweise nach Stand der Technik wie folgt gewonnen. Zunächst wird die Herstellung der entladenen (lithiumarmen) Metallimidanodenmaterialien aufgezeigt:
Thermische Zersetzung von Metallamiden, z.B.:

Mg(NH₂)₂ → MgNH + NH₃ (12)

(s. H.Jacobs, R.Juza, Z. Anorg. Allg. Chem. 1969, 370, 254-61).

Konproportionierung von Metallamiden mit Metallnitriden, z.B.:

LiNH2 + Li₃N → 2Li₂NH (13)

(s. Y.H. Hu, E. Ruckenstein, Ind.Eng.Chem.Res. 2006, 45, 4993-8).

Reaktion von Metallamiden mit Metallhydriden, z.B.:

LiNH₂ + LiH → Li₂NH + H₂ (14)

Umsetzung von Metallamiden mit Metallen, z.B.:

LiNH₂ + 2Li → Li₂NH + LiH (15)

Die ternären Systeme werden durch Umsetzung von Metallamiden und Metallhydriden unterschiedlicher Metalle hergestellt, beispielsweise:

2LiNH₂ + MgH₂ → Li₂Mg(NH)₂ + 2H₂ (16)

(s. Y. Chen et al., Int. J. Hydrogen Energy (2006), 31, 1236-40).

Die Synthesen können entweder thermisch (d.h. bei höheren Temperaturen, häufig im Temperaturbereich zwischen 150 und 500 °C) (s. Y. Wang, Phys. Rev. B: Condensed Matter and Materials Physics (2007), 76(1), 014116/1-014116/6) oder durch Mahlen, also mechanochemisch, bewirkt werden.

So ist beispielsweise die Synthese von Li₂Ca(NH)₂ durch Vermahlen in einer Kugelmühle beschrieben:

2LiNH₂ + CaH₂ → Li₂Ca(NH)₂ + 2H₂ (17)

(s. H. Wu, J. Am. Chem. Soc. 130, 6515-6522 (2008)).

Die lithiumbeladenen Metallimidanodenmaterialien werden wie folgt hergestellt:
Umsetzung von Metallnitriden mit Metallhydriden, beispielsweise:

Li₃N + LiH → Li₄NH (18)

(s. R. Marx, Z. Anorg. Allg. Chem. 623 (1997) 1912-16);
durch Reaktion von Metallamid und Metallnitrid in Metallschmelze, z.B.:

LiNH₂ + Li₃N + 4Li → 2Li₄NH (19)

(s. R. Niewa, D.A. Zherebtsov, Z. Kristallogr. NCS 217 (2002) 317-8);
durch Umsetzung von Metallamiden mit Metallen, z.B.:

LiNH₂ + 4Li → Li₄NH + LiH (20);

durch Umsetzung von Metallimiden mit Metallen, z.B.:

Li₂NH + 2Li → Li₄NH (21).

Die Metallimid-basierten Anodenmaterialien können für die Herstellung von galvanischen Elementen mit Kathodenmaterialien verwendet werden. Erfindungsgemäß werden als Kathodenmaterial im entladenen Zustand ein schichtstrukturiertes Material oder ein spinellstrukturiertes Material oder eines mit Olivinstruktur oder eine nichtlithiierte Metallinsertionsverbindung oder ein Konversionskathodenmaterial oder ein Lithiumoxid verwendet. Zu den bevorzugten Kathodenmaterialien gehören LiCoO₂, LiNiO₂, Li(Ni,Mn,Co)O₂, LiNi_{0,80}Co_{0,15}Al_{0,05}O₂ sowie LiMn₂O₄ und LiNi_{0.5}Mn_{1.5}O₄ und LiFePO₄ und LiMnPO₄. Es können auch elektrolytischer Braunstein (MnO₂) oder Vanadiumoxide (V₂O₃) oder Metallfluoride (z.B. NiF₂, CoF₂, FeF₂, FeF₃) oder Metalloxyfluoride (z.B. BiOₓF₃₋₂ₓ, FeOF) zum Einsatz kommen. Schließlich kann die Kathode ein Li₂O oder Li₂O₂ enthalten oder daraus bestehen. Die elektronisch nicht leitfähigen Kathodenmaterialien werden durch Zusatz von Leitfähigkeitsadditiven, beispielsweise Ruß, leitfähig gemacht.

Im Sinne der Erfindung ist es auch möglich, beliebige Mischungen aus verschiedenen Kathodenmaterialien zu verwenden.

Als Elektrolyte kommen die dem Fachmann geläufigen lithiumionenleitfähigen Materialien (Flüssig-, Gel-, Polymer- und Festelektrolyte) in Frage. Als Leitsalz werden erfindungsgemäß Lithiumsalze mit schwach koordinierenden, oxidationsstabilen Anionen verwendet. Dazu gehören beispielsweise LiPF₆, Lithiumfluoroalkylphosphate, LiBF₄, Imidsalze (z.B. LiN(SO₂CF₃)₂ oder LiN(SO₂F)₂), Lithiumtriflat (LiOSO₂CF₃), Methidsalze (z.B. LiC(SO₂CF₃)₃), LiClO₄, Lithiumchelatoborate (z.B. LiB(C₂O₄)₂, "LiBOB"), Lithiumfluorochelatoborate (z.B. LiC₂O₄BF₂, "LiDFOB"), Lithiumchelatophosphate (z.B. LiP(C₂O₄)₃, "LiTOP") und Lithiumfluorochelatophosphate (z.B. Li(C₂O₄)₂PF₂). Besonders bevorzugt sind Salze mit Anionen, die gegen Anionendissoziation stabil sind und die fluorfrei sind. Es wurde überraschend gefunden, dass Elektrolyte, die unter Verwendung fluorfreier Leitsalze, wie beispielsweise Chelatoboraten und Chelatophosphaten hergestellt werden, deutlich stabiler im Kontakt mit den erfindungsgemäßen Imidanodenmaterialien sind, so dass bei deren Verwendung galvanische Zellen mit deutlich verbesserten Sicherheitseigenschaften resultieren, als dies bei Verwendung von Salzen mit labilen Anionen (wie z.B. LiPF₆) der Fall ist. Es wird vermutet, dass LiPF₆-basierte Elektrolyte aufgrund der Anionendissoziation gemäß:

LiPF₆ → LiF + PF₅ (22)

reaktive Spezies (die Lewis-Säure PF₅ und/oder Folgeprodukte daraus) bilden, die mit den erfindungsgemäßen Metallimidanodenmaterialien bereits bei relativ niedriger Temperatur exotherm reagieren können.

Als Elektrolytlösungsmittel finden erfindungsgemäß aprotische Lösungsmittel ausgewählt aus den Stoffklassen der Kohlensäureester, Carbonsäureester, Ether (THF, MTHF, Ethylenglycoldialkylether, Dioxolan), Nitrile, Dinitrile, tertiären Amine, Dialkylsulfoxide, Lactone, Sulfolan oder ionischen Flüssigkeiten entweder in reiner Form oder in beliebigen Mischungen, Verwendung. Werden die Metallimidanodenmaterialien mit Hochvoltkathodenmaterialien (d.h. Aktivmaterialien mit einem Potential von ≥ ca. 4,5 V *vs* Li/Li⁺) eingesetzt, so werden besonders bevorzugt oxidationsstabile Fluide , beispielsweise Nitrile oder ionische Flüssigkeiten als Lösungsmittel verwendet.

Die Herstellung von Anodenabschnitten oder -bändern kann durch Aufpressen trockener Pulvermischungen auf einen Stromableiter (z.B. Kupfer- oder Nickelfolie oder -netz) erfolgen. Dazu werden die Metallimidanodenmaterialien unter Ausschluß von Luft und Feuchtigkeit, beispielsweise in einem Argon-befüllten Handschuhkasten, mit einem Binder und gegebenenfalls einem leitfähigkeitsverbessernden Additiv gemischt. Aufgrund der guten intrinsischen elektronischen Leitfähigkeit einiger der Metallimidanodenmaterialien erübrigt sich der Zusatz von Leitfähigkeitsadditiven in diesen Fällen. Dieser Verzicht hat eine weitere Steigerung der spezifischen elektrochemischen Kapazität zur Folge. Als Binder finden wasserfreie thermoplastische Polymermaterialien wie beispielsweise pulverförmiges PTFE Verwendung. Bevorzugt wird diese Mischung dann noch unter Inertgasatmosphäre gemahlen, beispielsweise unter Verwendung einer Stab- oder Kugelmühle. Nach Einstellung der gewünschten Partikelgrößenverteilung werden die erhaltenen Pulvermischungen auf den Stromableiter aufgepresst. Dies kann beispielsweise unter Verwendung einer Presse oder mittels eines Kalanders erfolgen.

Die Anodenmischung kann auch unter Verwendung eines Lösungsmittels, d.h. als fließfähige Dispersion hergestellt werden. Dazu werden die benötigten pulverförmigen Komponenten, d.h. das Metallimid-Aktivmaterial, der lösliche polymere Binder sowie gegebenenfalls ein Leitfähigkeitsadditiv unter Ausschluß von Luft und Feuchtigkeit in ein den Binder lösendes Lösungsmittel eingebracht und durch intensives Rühren oder ein Ultraschallverfahren homogen dispergiert. Diese Mischung wird dann in fließfähiger Form in der gewünschten Dicke auf den Stromableiter aufgebracht. Dann wird das Lösungsmittel abgedampft und die getrocknete Schicht durch Verpressen oder Kalandrieren verdichtet und vergleichmäßigt. Als Lösungsmittel kommen aprotische flüssige Stoffe, d. h. Fluide, die keine sauren Protonen enthalten, in Frage. Dies sind Kohlenwasserstoffe, Ether, Carbonylverbindungen, Sulfoxide, tertiäre Amine, N-Alkylpyrrolidone und Dialkylamide. Als Binder finden beispielsweise PVDF (z.B. kommerziell unter dem Markennamen *Solef* von Solvay Solexis erhältlich) mit N-Methylpyrrolidon (NMP), N-Ethylpyrrolidon (NEP), Dimethylsulfoxid (DMSO) oder γ-Butyrolacton (GBL) als Lösungsmittel oder lösliche Polydiene, beispielsweise Polybutadien (kommerziell unter dem Markennamen *Busofan* erhältlich) oder Polyisobutylen (kommerziell unter dem Markennamen *Oppanol* erhältlich) Verwendung. Polydiene lösen sich im allgemeinen sehr gut in Kohlenwasserstoffen (Aromaten, Aliphaten, Cycloaliphaten) und werden deshalb bevorzugt in diesen chemisch besonders beständigen und gegenüber den Metallimidanodenmaterialien stabilen Fluiden gelöst und für die Herstellung von Anodendispersionen verwendet. Wegen der zum Teil nicht ausreichenden Beständigkeit von Mischungen aus den Metallimidanodenmaterialien mit funktionalisierten Lösungsmitteln (d.h. Lösungsmitteln, die funktionelle Gruppen, beispielsweise O- oder N-haltige Funktionen enthalten), werden Kohlenwasserstoffe als Dispergiermittel und Polydiene als Binder bevorzugt verwendet. Ganz besonders bevorzugt ist die Kombination aus Polybutenen und gesättigten Kohlenwasserstoffen, beispielsweise Hexan, Heptan, Oktan, Nonan, Dekan, Undekan, Dodekan, Methylcyclohexan oder kommerziell erhältlichen Kohlenwasserstoff-Siedeschnitten, beispielsweise Shellsol D30 oder D100.

Die Erfindung betrifft im Einzelnen:
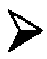 Ein galvanisches Element, welches die Metallimidverbindungen der allgemeinen Formeln (I)

   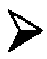 M¹₄₋₂ₓM²ₓ(NH)₂ · y M¹NH₂ (I)

   mit
   M¹ = Alkalimetall (Li, Na, K, Rb, Cs oder eine beliebige Mischung daraus)
   M2 = Erdalkalielement (Mg, Ca, Sr, Ba oder eine beliebige Mischung daraus)
   x und y unabhängig voneinander eine Zahl zwischen 0 und 1 im entladenen Zustand oder die Metallimidverbindungen der allgemeinen Formeln (II)

   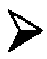 Li4M¹₄₋₂ₓM²x(NH)₂ · y LiH (II)

   mit
   M¹ = Alkalimetall (Li, Na, K, Rb, Cs oder eine beliebige Mischung daraus)
   M² = Erdalkalielement (Mg, Ca, Sr, Ba oder eine beliebige Mischung daraus)
   x und y unabhängig voneinander eine Zahl zwischen 0 und 1 im geladenen Zustand enthält.
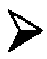 Ein galvanisches Element, bei dem die lithiierte Metallinsertionskathoden ein schichtstrukturiertes Material wie LiCoO₂, LiNiO₂, Li(Ni,Mn,Co)O₂, LiNi_{0,80}Co_{0,15}Al_{0,05}O₂ oder ein spinellstrukturiertes Material wie LiMn₂O₄ und LiNi_{0.5}Mn_{1.5}O₄ oder eines mit Olivinstruktur wie LiFePO₄ und LiMnPO₄ oder eine nichtlithiierte Metallinsertionsverbindungen wie elektrolytischen Braunstein (MnO₂) oder Vanadiumoxide (V₂O₃) oder ein Konversionskathodenmaterial wie Metallfluoride (z.B. NiF₂, CoF₂, FeF₂, FeF₃) oder Metalloxyfluoride (z.B. BiOₓF₃₋₂ₓ, FeOF) oder ein Lithiumoxid (Li₂O oder Li₂O₂) enthält.
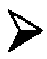 Ein galvanisches Element, welches als Leitsalz Lithiumsalze mit schwach koordinierenden, oxidationsstabilen Anionen, beispielsweise LiPF₆, Lithiumfluoroalkylphosphate, LiBF₄, Imidsalze (z.B. LiN(SO₂CF₃)₂), LiOSO₂CF₃, Methidsalze (z.B. LiC(SO₂CF₃)₃), LiClO₄, Lithiumchelatoborate (z.B. LiBOB), Lithiumfluorochelatoborate (z.B. LiC₂O₄BF₂), Lithiumchelatophosphate (z.B. LiTOP) und Lithiumfluorochelatophosphate (z.B. Li(C₂O₄)₂PF₂) oder beliebige Mischungen daraus enthält.
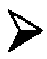 Ein galvanisches Element, welches ein Leitsalz enthält, das gegen Anionendissoziation stabil ist.
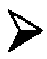 Ein galvanisches Element, welches fluorfreie Leitsalze wie Lithiumchelatoborate oder Lithiumchelatophosphate enthält.
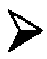 Verwendung eines Anodenmaterials in einem galvanischen Element, welches als aktives Material die im entladenen (Li-armen Zustand) Metallimidverbindungen der allgemeinen Formeln (I)

   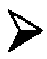 M¹₄₋₂ₓM²ₓ(NH)₂ · y LiNH₂ (I)

   mit
   M¹ = Alkalimetall (Li, Na, K, Rb, Cs oder eine beliebige.Mischung daraus)
   M² = Erdalkalielement (Mg, Ca, Sr, Ba oder eine beliebige Mischung daraus)
   x und y unabhängig voneinander eine Zahl zwischen 0 und 1 oder im geladen (Li-reichen Zustand) Metallimidverbindungen der allgemeinen Formeln (II)

   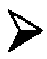 Li₄M¹₄₋₂ₓM²ₓ(NH)₂ · y LiH (II)

   mit
   M¹ = Alkalimetall (Li, Na, K, Rb, Cs oder eine beliebige Mischung daraus)
   M² = Erdalkalielement (Mg, Ca, Sr, Ba oder eine beliebige Mischung daraus)
   x und y unabhängig voneinander eine Zahl zwischen 0 und 1 enthält oder daraus besteht.
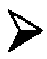 Ein Verfahren zur Herstellung eines aktiven Materials, bei dem Metallimide M³_{2/y}NH mit Metallen M⁴ gem. folgender Gleichung umgesetzt werden:

   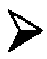 n (M³₂/_{y}NH + 2/zM⁴) → (M⁴_{2/z}M³_{2/y}NH)ₙ

   mit M³ und M⁴ unabhängig voneinander Li, Na, K, Rb, Cs, Mg, Ca, Sr, Ba) und y und z die Wertigkeit der Metalle M³ bzw. M⁴ und
   n eine Zahl zwischen 1 und 5.
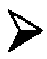 Ein Verfahren zur Herstellung eines aktiven Materials, bei dem die Reaktion entweder im der Festphase bei Temperaturen zwischen 100 und 600 °C oder in Lösemittelsuspension in einem gegenüber Rohstoffen und Produkten inerten Lösemittel bei Temperaturen zwischen 100 und 300 °C durchgeführt wird.

Die Erfindung wird anhand der folgenden Beispiele und Abbildungen erläutert:
Es zeigen:
Fig. 1: Thermische Stabilität einer Mischung aus Li₂NH und LiPF₆, Lösung in EC/EMC
Fig. 2: Thermische Stabilität einer Mischung aus Li₂NH und LiBOB, Lösung in EC/EMC
Fig. 3: Thermische Stabilität einer Mischung aus Li₄NH und LiPF₆, Lösung in EC/EMC
Fig. 4: Thermische Stabilität einer Mischung aus Li₄NH und LiBOB, Lösung in EC/EMC
Fig. 5: Thermische Stabilität einer Mischung aus Li₂NH und N-Methylpyrrolidon (NMP, Wassergehalt 350 ppm)
Fig. 6: Zykelverhalten von Li₂NH aus Beispiel 10 in einer Halbzelle gegen Lithium, Elektrolyt 11 % LiPF₆, 2 % LiBOB in EC-EMC (1:1)
Fig. 7: Zykelverhalten von Li₄NH aus Beispiel 11 in einer Halbzelle gegen Lithium, Elektrolyt 11 % LiPF₆, 2 % LiBOB in EC-EMC (1:1)

### Beispiel 1: Herstellung von Lithiumimid (Li₂NH) aus LiNH₂ und Li₃N (Gl. 13)

In einer Argon (Ar) -gefüllten Handschuhbox wurde ein mit einem Druckanzeigegerät ausgestatteter Rohrbombenautoklav mit einem Fassungsvermögen von 250 ml mit einer Mischung aus 8,04 g gemahlenem LiNH₂ und 12,19 g ebenfalls gemahlenem Li₃N gefüllt und innerhalb von 1 Stunde (h) auf 260 °C erhitzt. Dann wurde noch 3 h bei 300 °C nachreagiert. Bei der Synthese baute sich kein Druck auf (maximal 0,3 bar). Nach Abkühlen auf Raumtemperatur (RT) wurde das entstandene Produkt unter Ar -Atmosphäre in ein Ar-gefülltes Aufbewahrungsgefäß gefüllt.
Ausbeute: 19,5 g (96 % d.Th.) farbloses Pulver
Röntgenbeugung (international *X*-*Ray Diffraction,* XRD): phasenreines Li₂NH

### Beispiel 2: Herstellung einer Mischung aus Lithiumimid (Li₂NH) und Lithiumhydrid (LiH) aus Lithiumamid (LiNH₂) und Lithiummetall (Gl. 15)

Im Rohrbombenautoklaven aus Beispiel 1 wurde eine homogenisierte Mischung aus 6,20 g gepulvertem Lithiumamid und 3,75 g Lithiummetallpulver unter Ar-Atmosphäre auf 230 °C erhitzt. Beim Überschreiten von etwa 180 °C stieg der Druck plötzlich von <0,2 bar auf 6,2 bar und der Temperaturanstieg auf die Solltemperatur 230 °C beschleunigte sich durch die stattfindende exotherme Reaktion. Es wurde noch eine halbe Stunde bei 230 °C nachreagiert, wobei der Druck auf 2 bar fiel. Dann wurde auf RT abgekühlt und das teils pulvrige, teils leicht verklumpte Produkt in eine inertisierte Glasflasche abgefüllt.
Ausbeute: 9,7 g (97 % d. Th.) farbloser Feststoff
XRD: Mischung aus LiH und Li₂NH

### Beispiel 3: Herstellung von Lithiumnitridhydrid (Li₄NH) aus Lithiumimid (Li₂NH) und Lithiummetall (Gl. 21)

Im Rohrbombenautoklaven aus Beispiel 1 wurde eine homogenisierte Mischung aus 16,3 g gepulvertem Lithiumimid und 7,83 g Lithiummetallpulver unter Ar-Atmosphäre zunächst auf 220 °C erhitzt. Beim Übersteigen von 200 °C setzte, erkenntlich an einem kurzfristigen Temperaturanstieg auf 224 °C, eine exotherme Reaktion ein. Nach Einstellung des Temperaturausgleichs wurde noch 1,5 h bei 300 °C nachreagiert. Die Mischung wurde auf RT abgekühlt und unter Ar-Atmosphäre in ein Ar-gefülltes Aufbewahrungsgefäß gefüllt.
Ausbeute: 22,4 g (93 % d.Th.) farbloses, z.T. verklumptes Pulver
XRD: weitgehend phasenreines Li₄NH

### Beispiel 4: Stabilität von Lithiumimid gegen LiPF₆ in EC/EMC

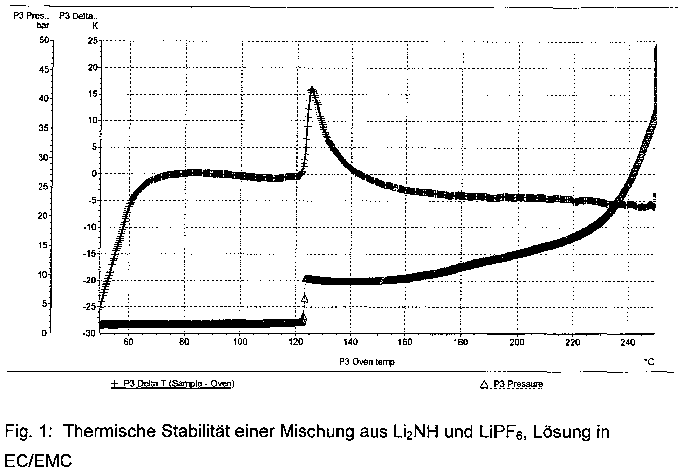

In einen 3 ml fassenden Stahlautoklaven der Firma Systag, Schweiz wurden 0,10 g Lithiumimidpulver aus Beispiel 1 und 2,53 g einer 12%igen Lösung von LiPF₆ in Ethylencarbonat (EC) zu Ethylmethylcarbonat (EMC) im Gewichtsverhältnis EC/EMC (1:1, wt:wt) gefüllt und mit einem Deckel mit angeschlossenem Druckaufnehmer verschlossen. Der Autoklav wurde in einer Differentialthermoanalyse (DSC) Radex-Apparatur von Firma Systag auf 250 °C erwärmt. Das Ergebnis ist in Figur 1 festgehalten: Bis etwa 120 °C zeigt diese Mischung keinerlei thermochemische Effekte. Sie ist also stabil. Beim Überschreiten einer Ofentemperatur von 123 °C kommt es zu einem abrupten Druckaufbau (9 bar), begleitet von einem stark exothermen Peak. Bei der angegebenen Temperatur zersetzt sich die Mischung. Beim Versuchsende, also einer Ofentemperatur von 250 °C, ist der Druck auf etwa 40 bar gestiegen. Dies deutet auf die Bildung von gas- oder dampfförmigen Zersetzungsprodukten hin.

### Beispiel 5: Stabilität von Lithiumimid gegen LiBOB in EC/EMC

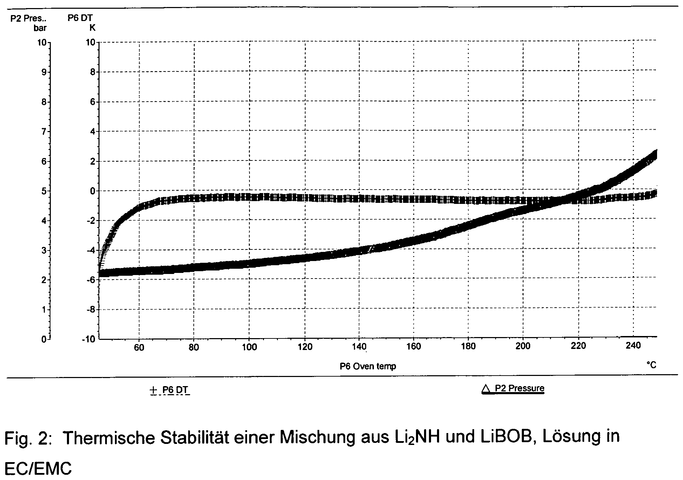

In dieselbe Apparatur wie in Beispiel 4 wurden 0,10 g Li₂NH-Pulver und 2,96 g einer 12 %igen Lithium *bis*(oxalato)borat (LiBOB)-Lösung in EC/EMC (1:1, wt:wt) gefüllt und mit einem Deckel mit angeschlossenem Druckaufnehmer verschlossen. Wie Figur 2 zu entnehmen ist, wird bis zum Erreichen der Endtemperatur der DSC-Messung (250 °C) weder ein thermischer Effekt noch ein über den natürlichen Lösemitteldampfdruck hinausgehender Druckaufbau registriert. Dies belegt die ungewöhnlich gute Stabilität der Untersuchungsmischung.

### Beispiel 6: Stabilität von Lithiumnitridhydrid gegen LiPF₆ in EC/EMC

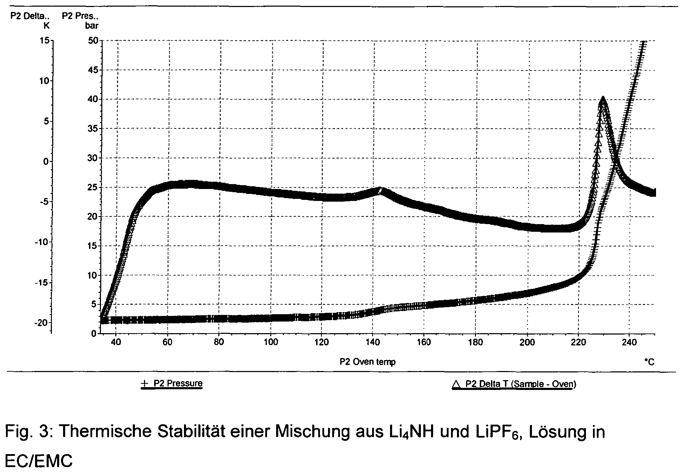

In dieselbe Apparatur wie in Beispiel 4 wurden 0,10 g Li₄NH-Pulver und 2,52 g einer 12 %igen LiPF₆ -Lösung in EC/EMC (1:1, wt:wt) gefüllt und mit einem Deckel mit angeschlossenem Druckaufnehmer verschlossen. Wie Figur 3 zu entnehmen ist, zeigt das System bei Peaktemperaturen von 145 und 230 °C ein schwächeres und ein sehr stark exothermes Ereignis. Vor allem letzteres ist mit einem starken Druckaufbau verbunden (Enddruck bei 250 °C liegt bei 50 bar). Das betrachtete System ist also nur bis zu einer Temperatur von etwa 120 °C stabil.

### Beispiel 7: Stabilität von Lithiumnitridhydrid gegen LiBOB in EC/EMC

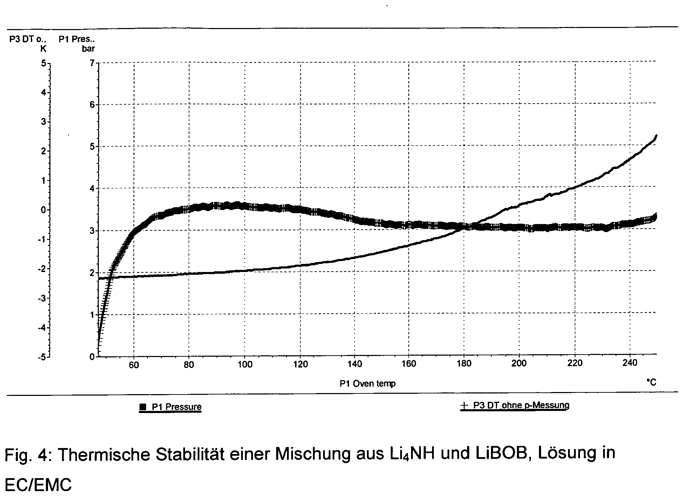

In dieselbe Apparatur wie in Beispiel 4 wurden 0,10 g Li₄NH-Pulver und 2,74 g einer 12 %igen LiBOB-Lösung in EC/EMC (1:1, wt:wt) gefüllt und mit einem Deckel mit angeschlossenem Druckaufnehmer verschlossen. Wie Figur 4 zu entnehmen ist, wird bis zum Erreichen der Endtemperatur der DSC-Messung (250 °C) weder ein thermischer Effekt noch ein über den natürlichen Lösemitteldampfdruck hinausgehender Druckaufbau registriert. Dies belegt die ungewöhnlich gute Stabilität der Untersuchungsmischung.

### Beispiel 8: Stabilität von Lithiumimid gegen NMP (2-Methylpyrrolidon)

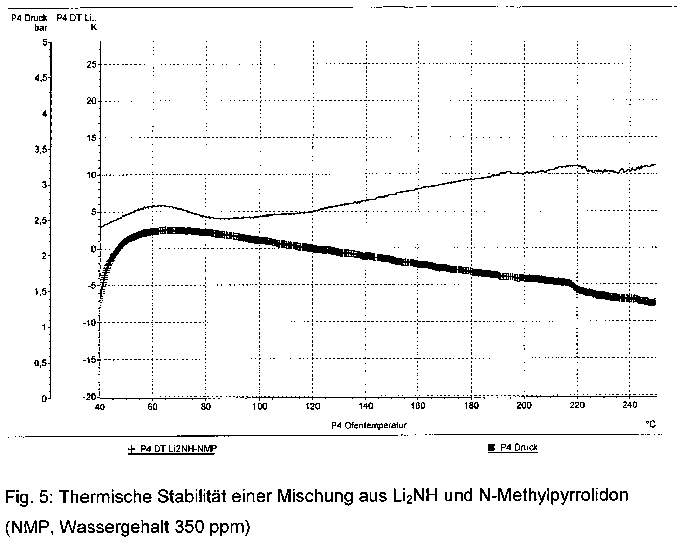

In dieselbe Apparatur wie in Beispiel 4 wurden 0,10 g Li₂NH-Pulver und 1,90 g NMP (350 ppm Wassergehalt) gefüllt und mit einem Deckel mit angeschlossenem Druckaufnehmer verschlossen. Wie Figur 5 zu entnehmen ist, wird bis zur Endtemperatur von 250°C kein signifikantes Exotherm beobachtet. Bei höheren Wassergehalten, beispielsweise 1,3 % wird aber bereits bei relativ tiefen Temperaturen (50-60°C) eine exotherme Zersetzung registriert (keine Abb.)..

### Beispiel 9: Herstellung einer erfindungsgemäßen Anode mit Li₂NH als Aktivmaterial

5,5 g Lithiumimidpulver aus Beispiel 1 sowie 3,3 g PTFE-Pulver (Firma Aldrich) sowie 1,3 g Leitruß (C45 von Firma Timcal) werden in einer Ar-gefüllten Handschuhbox in einer Glasflasche vorgemischt und dann in einem Achatmörser gemahlen. Das homogene Pulver wird dann mit einem Druck von 2 t in eine als Stromableiter dienende Rein-Nickelnetzrondelle gepresst.

### Beispiel 10: Herstellung einer galvanischen Halbzelle mit Li₂NH als Aktivmaterial und Lade-, Entladetests

Die gepresste Rundanode aus Beispiel 9 wird in einer Swagelok-artigen Testzelle unter Verwendung einer Gegen- und Referenzelektrode bestehend aus reinen Lithiumblechen zu einer elektrochemischen Zelle montiert. Als Elektrolyt dient eine Lösung, in der 11 % LiPF₆ sowie 2 % LiBOB gelöst vorliegen. Der Zellenbau wird wegen der Luftempfindlichkeit der verwendeten Materialien in einer Ar-gefüllten Handschuhbox vorgenommen.

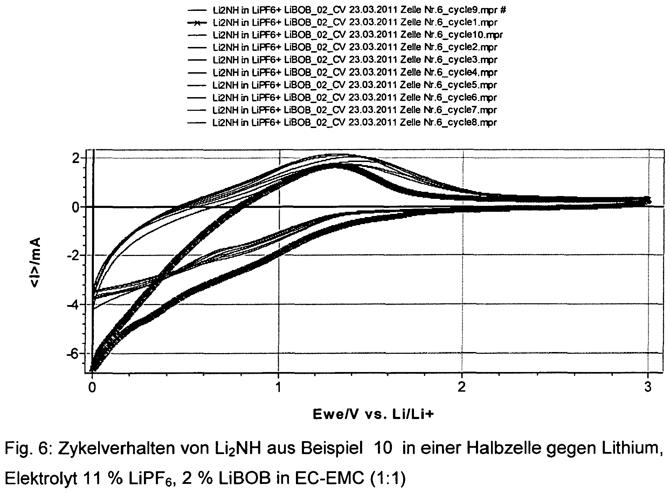

Die Zelle wird nun mittels eines Potentiostaten Lade-, Enladezyklen unterworfen (Fig. 6, es sind die ersten 10 Zyklen dargestellt). Die Lade- und Entladeraten betragen konstant 1 C.

Man erkennt, dass die erfindungsgemäße Kathode reversibel Lithium ein- und auslagern kann.

### Beispiel 11: Herstellung einer galvanischen Halbzelle mit Li₄NH als Aktivmaterial und Lade-, Entladetests

In einer Ar-gefüllten Handschuhbox wird wie in Beispiel 9 beschrieben eine trockene Mischung aus 65 % Lithiumnitridhydridpulver (aus Beispiel 3) mit 33 % PTFE-Pulver sowie 2 % Leitruß C45 hergestellt, fein vermahlen und auf Nickelnetz verpreßt (2 t Preßdruck).

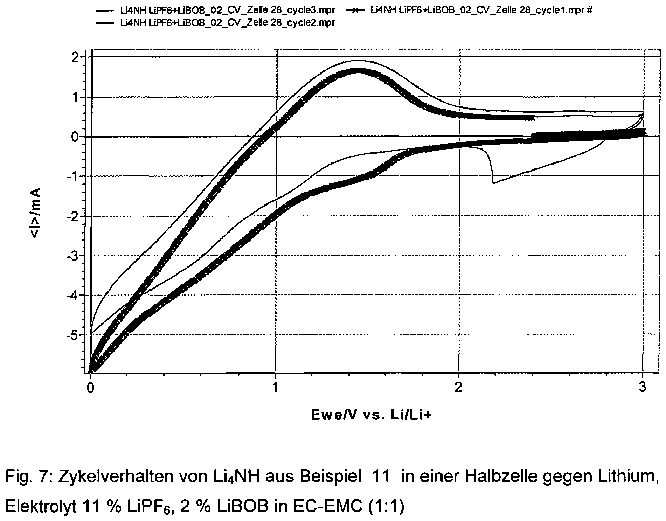

Mit dem Preßling wird eine elektrochemische Zelle analog Beispiel 10 gefertigt. Die Zelle wird mit einem konstanten Lade- Entladeregime von 1 C zyklisiert. Wie Fig. 7 zu entnehmen, lässt sich auch in Li₄NH reversibel und mit hoher Effizienz Lithium ein- und auslagern.

## Patentansprüche

1. Galvanisches Element, **dadurch gekennzeichnet, dass** es als aktives Anodenmaterial Metallimidverbindungen der allgemeinen Formel (I)
M¹₄₋₂ₓM²ₓ(NH)₂ · y M¹NH₂ (I)
mit
M¹ = Alkalimetall (Li, Na, K, Rb, Cs oder eine beliebige Mischung daraus)
M² = Erdalkalielement (Mg, Ca, Sr, Ba oder eine beliebige Mischung daraus)
x und y unabhängig voneinander eine Zahl zwischen 0 und 1 im entladenen Zustand oder die Metallimidverbindungen der allgemeinen Formel (II)
Li4M¹₄₋₂ₓM²ₓ(NH)2 · y LiH (II)
mit
M¹ = Alkalimetall (Li, Na, K, Rb, Cs oder eine beliebige Mischung daraus)
M² = Erdalkalielement (Mg, Ca, Sr, Ba oder eine beliebige Mischung daraus)
x und y unabhängig voneinander eine Zahl zwischen 0 und 1 im geladenen Zustand
als Kathodenmaterial im entladenen Zustand ein schichtstrukturiertes Material oder ein spinellstrukturiertes Material oder eines mit Olivinstruktur oder sie eine nichtlithiierte Metallinsertionsverbindung oder ein Konversionskathodenmaterial oder ein Lithiumoxid, als Leitsalz Lithiumsalze mit schwach koordinierenden, oxidationsstabilen Anionen in einem aprotische Lösemittel ausgewählt aus den Stoffklassen der Kohlensäureester, Carbonsäureester, Ether, Nitrile, tertiäre Amine, Dialkylsulfoxide, Lactone, Sulfolan oder ionischen Flüssigkeiten, entweder in reiner Form oder in beliebigen Mischungen, enthält.

2. Galvanisches Element nach Anspruch 1, **dadurch gekennzeichnet, dass** die Kathode im entladenen Zustand LiCoO₂, LiNiO₂, Li(Ni,Mn,Co)O₂, LiNi_{0,80}Co_{0,15}Al_{0,05}O₂ oder LiMn₂O₄ und LiNi_{0.5}Mn_{1.5}O₄ oder LiFePO₄ und LiMnPO₄ oder sie elektrolytischen Braunstein (MnO₂) oder Vanadiumoxide (V₂O₃) oder Metallfluoride oder Metalloxyfluoride oder ein Lithiumoxid (Li₂O, Li₂O₂) enthält oder daraus besteht.

3. Galvanisches Element nach Anspruch 1 oder 2, **dadurch gekennzeichnet, dass** es als Leitsalz LiPF₆, Lithiumfluoroalkylphosphate, LiBF₄, Imidsalze, Lithiumtriflat (LiOSO₂CF₃), Methidsalze, LiClO₄, Lithiumchelatoborate, Lithiumchelatophosphate oder Lithiumfluorochelatophosphate oder beliebige Mischungen daraus enthält.

4. Galvanisches Element nach Anspruch 3, **dadurch gekennzeichnet, dass** es ein Leitsalz enthält, welches gegen Anionendissoziation stabil ist.

5. Galvanisches Element nach Anspruch 4, **dadurch gekennzeichnet, dass** es fluorfreie Leitsalze wie Lithiumchelatoborate oder Lithiumchelatophosphate enthält.

6. Verwendung eines Anodenmaterials in einem galvanischen Element gemäß einem oder mehreren der Ansprüche 1 bis 5, **dadurch gekennzeichnet, dass** das aktive Anodenmaterial Metallimidverbindungen der allgemeinen Formel (I)
M¹₄₋₂ₓM²ₓ(NH)₂ · y LiNH₂ (I)
mit
M¹ = Alkalimetall (Li, Na, K, Rb, Cs oder eine beliebige Mischung daraus)
M² = Erdalkalielement (Mg, Ca, Sr, Ba oder eine beliebige Mischung daraus)
x und y unabhängig voneinander eine Zahl zwischen 0 und 1 im entladenen, Li-armen Zustand
oder
Metallimidverbindungen der allgemeinen Formel (II)
Li4M¹₄₋₂ₓM²ₓ(NH)2 · y LiH (II)
mit
M¹ = Alkalimetall (Li, Na, K, Rb, Cs oder eine beliebige Mischung daraus)
M² = Erdalkalielement (Mg, Ca, Sr, Ba oder eine beliebige Mischung daraus)
x und y unabhängig voneinander eine Zahl zwischen 0 und 1 im geladenen, Li-reichen Zustand
enthält oder daraus besteht.

7. Verfahren zur Herstellung eines aktiven Anodenmaterials gemäß Anspruch 6, **dadurch gekennzeichnet, dass** Metallimide M³_{2/y}NH mit Metallen M⁴ gemäß folgender Gleichung umgesetzt werden:
n(M³_{2/y}NH + 2/zM⁴) → (M⁴_{2/z}M³_{2/y}NH)ₙ
mit M³ und M⁴ unabhängig voneinander Li, Na, K, Rb, Cs, Mg, Ca, Sr, Ba) und
y und z die Wertigkeit der Metalle M³ bzw. M⁴ und
n eine Zahl zwischen 1 und 5.

8. Verfahren nach Anspruch 7, **dadurch gekennzeichnet, dass** die Reaktion entweder in der Festphase bei Temperaturen zwischen 100 und 600 °C oder in Lösemittelsuspension in einem gegenüber Rohstoffen und Produkten inerten Lösemittel bei Temperaturen zwischen 100 und 300 °C durchgeführt wird.

## Claims

1. A galvanic element, **characterized in that**, as active anode material, it contains metal imide compounds of the general formula (I)
M¹₄₋₂ₓM²ₓ(NH)₂ · y M¹NH₂ (I)
with
M¹ = alkali metal (Li, Na, K, Rb, Cs or any mixture thereof)
M² = alkaline earth element (Mg, Ca, Sr, Ba or any mixture thereof)
x and y independently of one another a number between 0 and 1 in the discharged state, or the metal imide compounds of the general formula (II)
Li4M¹₄₋₂ₓM²ₓ(NH) ₂ · y LiH (II)
with
M¹ = alkali metal (Li, Na, K, Rb, Cs or any mixture thereof)
M² = alkaline earth element (Mg, Ca, Sr, Ba or any mixture thereof)
x and y independently of one another a number between 0 and 1 in the charged state
as the cathode material in the discharged state, a layer-structured material or a spinel-structured material or an olivine structure or non-lithiated metal insertion compound or a conversion cathode material or a lithium oxide, as conducting salt lithium salts with weakly coordinating, oxidation-stable anions in an aprotic solvent selected from the classes of carbonic acid esters, carboxylic acid esters, ethers, nitriles, tertiary amines, dialkyl sulfoxides, lactones, sulfolane or ionic liquids, either in pure form or in any mixtures.

2. The galvanic element according to claim 1, **characterized in that** the cathode in the discharged state contains or consists of LiCoO₂, LiNiO₂, Li (Ni,Mn,Co)O₂, LiNi_{0.80}Co_{0.15}Al_{0,05}O₂ or LiMn₂O₄ and LiNi_{0.5}Mn_{1.5}O₄ or LiFePO₄ and LiMnPO₄ or electrolytic manganese dioxide (MnO₂) or vanadium oxides (V₂O₃) or metal fluorides or metal oxyfluorides or a lithium oxide (Li₂O, Li₂O₂).

3. The galvanic element according to claim 1 or 2, **characterized in that** it contains LiPF₆, lithium fluoro alkylphosphates, LiBF₄, imide salts, lithium triflate (LiOSO₂CF₃), methide salts, LiClO₄, lithium chelatoborates, lithium chelatophosphates or lithium fluoro chelatophosphates or any mixtures thereof as the conducting salt.

4. The galvanic element according to claim 3, **characterized in that** it contains a conducting salt which is stable against anion dissociation.

5. The galvanic element according to claim 4, **characterized in that** it contains fluorine-free conducting salts such as Lithium chelatoborates or Lithium chelatophosphates.

6. Use of an anode material in a galvanic element according to one or more of claims 1 to 5, **characterized in that** the active anode material contains or consists of metal imide compounds of the general formula (I)
M¹₄₋₂ₓM²ₓ(NH) ₂ · y LiNH₂ (I)
with
M¹ = alkali metal (Li, Na, K, Rb, Cs or any mixture thereof)
M² = alkaline earth element (Mg, Ca, Sr, Ba or any mixture thereof)
x and y independently of one another a number between 0 and 1 in the discharged, low Li state,
or
metal imide compounds of the general formula (II)
Li4M¹₄₋₂ₓM²ₓ(NH) ₂ · y LiH (II)
with
M¹ = alkali metal (Li, Na, K, Rb, Cs or any mixture thereof)
M² = alkaline earth element (Mg, Ca, Sr, Ba or any mixture thereof)
x and y independently of one another a number between 0 and 1 in the charged, high Li state.

7. A process for preparing an active anode active material according to claim 6, **characterized in that** metal imides M³_{2/y}NH are reacted with metals M⁴ according to the following equation:
n(M³_{2/y}NH + 2/zM⁴) → (M⁴_{2/z}M³_{2/y}NH)ₙ
with M³ and M⁴ independently of one another Li, Na, K, Rb, Cs, Mg, Ca, Sr, Ba) and y and z the valency of the metals M³ or M⁴ and
n a number between 1 and 5.

8. The method according to claim 7, **characterized in that** the reaction is carried out either in the solid phase at temperatures between 100 and 600 °C or in solvent suspension in solvents that are inert to raw materials and products, at temperatures between 100 and 300 °C.

## Revendications

1. Élément galvanique, **caractérisé en ce qu'**il contient, comme matériaux d'anodes actifs, des composés d'imides de métal de formule générale (I)
M¹₄₋₂ₓM²ₓ(NH) ₂ · y M¹NH₂ (I)
où M¹ = métal alcalin (Li, Na, K, Rb, Cs, ou un mélange quelconque de ceux-ci),
M² = élément alcalino-terreux (Mg, Ca, Sr, Ba ou un mélange quelconque de ceux-ci),
x et y représentent, indépendamment l'un de l'autre, un nombre compris entre 0 et 1 à l'état déchargé ou des composés d'imides de métal de formule générale (II)
Li₄M¹₄₋₂xM²ₓ(NH)₂ · y LiH (II)
où M¹ = métal alcalin (Li, Na, K, Rb, Cs, ou un mélange quelconque de ceux-ci),
M² = élément alcalino-terreux (Mg, Ca, Sr, Ba ou un mélange quelconque de ceux-ci),
x et y représentent, indépendamment l'un de l'autre, un nombre compris entre 0 et 1 à l'état chargé
comme matériaux de cathodes à l'état déchargé, un matériau structuré en couches ou un matériau structuré en spinelle ou un matériau ayant une structure d'olivine ou un composé d'insertion de métal non lithié ou un matériau de cathodes de conversion ou un oxyde de lithium, comme sel conducteur, des sels de lithium ayant des anions à faible coordination, stables à l'oxydation dans un solvant aprotique choisi dans les classes de substances des esters d'acide carbonique, esters d'acide carboxylique, éthers, nitriles, amines tertiaires, dialkylsulfoxydes, lactones, sulfolane ou liquides ioniques, soit sous forme pure soit en mélanges quelconques.

2. Élément galvanique selon la revendication 1, **caractérisé en ce que** la cathode contient à l'état déchargé du LiCoO₂, LiNiO₂, Li(Ni,Mn,Co)O₂, LiNi_{0,80}Co_{0,15}Al_{0,05}O₂ ou LiMn₂O₄ et LiNi_{0,5}Mn_{1,5}O₄ ou LiFePO₄ et LiMnPO₄ ou qu'elle contient de la pyrolusite électrolytique (MnO₂) ou des oxydes de vanadium (V₂O₃) ou des fluorures de métal ou des oxyfluorures de métal ou un oxyde de lithium (Li₂O, Li₂O₂) ou s'en compose.

3. Élément galvanique selon la revendication 1 ou 2, **caractérisé en ce qu'**il contient, comme sel conducteur, du LiPF₆, des fluoroalkylphosphates de lithium, du LiBF₄, des sels d'imide, du triflate de lithium (LiOSO₂CF₃), des sels de méthylures, du LiClO₄, des chélatoborates de lithium, des chélatophosphates de lithium, ou des fluorochélatophosphates de lithium ou des mélanges quelconques de ceux-ci.

4. Élément galvanique selon la revendication 3, **caractérisé en ce qu'**il contient un sel conducteur qui est stable vis-à-vis de la dissociation des anions.

5. Élément galvanique selon la revendication 4, **caractérisé en ce qu'**il contient des sels conducteurs exempts de fluor tels que les chélatoborates de lithium ou les chélatophosphates de lithium.

6. Utilisation d'un matériau d'anodes dans un élément galvanique selon l'une ou plusieurs des revendications 1 à 5, **caractérisé en ce que** le matériau d'anodes actif contient des composés d'imides de métal de formule générale (I)
M¹₄₋₂ₓM²ₓ(NH)₂ · y LiNH₂ (I)
où M¹ = métal alcalin (Li, Na, K, Rb, Cs, ou un mélange quelconque de ceux-ci),
M² = élément alcalino-terreux (Mg, Ca, Sr, Ba ou un mélange quelconque de ceux-ci),
x et y représentent, indépendamment l'un de l'autre, un nombre compris entre 0 et 1 à l'état déchargé, pauvre en Li
ou
des composés d'imides de métal de formule générale (II)
Li₄M¹₄₋₂ₓM²ₓ(NH)₂ · y LiH (II)
où M¹ = métal alcalin (Li, Na, K, Rb, Cs, ou un mélange quelconque de ceux-ci),
M² = élément alcalino-terreux (Mg, Ca, Sr, Ba ou un mélange quelconque de ceux-ci),
x et y représentent, indépendamment l'un de l'autre, un nombre compris entre 0 et 1 à l'état chargé, riche en Li ou s'en compose.

7. Procédé de fabrication d'un matériau d'anodes actif selon la revendication 6, **caractérisé en ce que** des imides de métal M³_{2/y}NH sont convertis avec des métaux M⁴ d'après l'équation bilan suivante :
n(M³_{2/y}NH + 2/zM⁴) → (M⁴_{2/z}M³_{2/y}NH)ₙ
où M³ et M⁴ représentent indépendamment l'un de l'autre Li, Na, K, Rb, Cs, Mg, Ca, Sr, Ba et
y et z la valence des métaux M³ et/ou M⁴ et
n est un nombre compris entre 1 et 5.

8. Procédé selon la revendication 7, **caractérisé en ce que** la réaction est effectuée soit en phase solide à des températures comprises entre 100 et 600°C soit en suspension de solvant dans un solvant inerte vis-à-vis des matières premières et produits à des températures comprises entre 100 et 300°C.
